# EUROPÄISCHE PATENTSCHRIFT

(11) **EP 1 694 528 B1**
(45) Veröffentlichungstag und Bekanntmachung des Hinweises auf die Patenterteilung: **29.04.2009**
(21) Anmeldenummer: 04803909.3
(22) Anmeldetag: 15.12.2004
(51) Int. Cl.: B60N 2/22, B60N 2/34, B60N 2/64, B64D 11/06, A47C 17/80

(54) **LUFTKISSENANORDNUNG FÜR EINEN PASSAGIERSITZ**
AIR CUSHION ARRANGEMENT FOR A PASSENGER SEAT
ENSEMBLE DE COUSSINS GONFLABLES POUR SIEGE PASSAGER

(30) Priorität: 15.12.2003 DE 10358951
(43) Veröffentlichungstag der Anmeldung: 30.08.2006
(73) Patentinhaber: Deutsche Lufthansa AG, 50679 Köln (DE)
(72) Erfinder: VOIGT, Joachim, 61130 Nidderau (DE); VOLTZ, Steffen, 64380 Rossdorf (DE)
(74) Vertreter: Lenzing, Andreas
(86) Internationale Anmeldenummer: PCT/EP2004/014291
(87) Internationale Veröffentlichungsnummer: WO 2005/056330

(56) Entgegenhaltungen:
- EP-A- 1 099 627
- DE-A1- 3 607 258
- DE-A1- 10 027 686
- DE-A1- 19 725 194
- US-A- 4 491 364
- US-A- 4 589 695
- US-A- 5 159 726

## Beschreibung

Die vorliegende Erfindung betrifft eine Luftkissenanordnung für einen Passagiersitz, insbesondere für ein Verkehrsflugzeug.

Passagiersitze haben eine Vielzahl von Anforderungen zu erfüllen, zu denen auch die Komfortwünsche der Benutzer zählen. So muss beispielsweise bei Flugzeugsitzen in der aufrechten Stellung die Rückenlehne eine seitliche Abstützung gewährleisten, während sie in einer flachen oder vollkommen ebenen Stellung eine möglichst ebene Liegefläche ähnlich einer Matratze bieten soll. In einer Zwischenstellung, die als Ruheposition bezeichnet werden kann, sind verschieden wählbare Unterstützungen des Lendenwirbel- oder Lumbalbereichs gewünscht.

Aus der DE3607258A1 sind selbstaufblasende, schaumstoffgefüllte Kissen bekannt, die unter dem Bezug eines Kraftfahrzeugsitzes angeordnet sind. Diese werden im Rücken- und Sitzbereich dazu verwendet, eine Anpassung der Kontur und der Polsterdicke an die anatomischen Anforderungen des Benutzers zu ermöglichen. Eine separate Einstellbarkeit des mittigen Bereichs und der Seitenbereiche der Rückenlehne ist nicht vorgesehen.

In der Offenlegungsschrift DE 10027686 A1 ist eine Sitzbank oder ein Einzelsitz beschrieben, bei dem ein Sitzkissen oder ein Rückenlehnenoberteil mit Luftkammern für einen mittigen Bereich und seitliche Bereiche versehen ist. Die Luftkammern sind zur Oberseite, auf der der Passagier sitzt oder sich anlehnt, mit einer ebenen, elastischen Deckplatte versehen. Die Kammern sind aufblasbar. In aufgeblasenem Zustand der Kammern nimmt der Fahrzeugsitz eine Konturierung an. In drucklosem Zustand ist die Oberfläche wieder eben.

Die Offenlegungsschrift EP 1 099 627 A1 zeigt eine als separates Element ausgeführte Matratze, die zur Erzielung einer ebenen Oberfläche auf einen in Liegeposition befindlichen Flugzeugsitz gelegt werden kann. Die Matratze weist an ihrer Unterseite ein zuu der Kontur des Sitzes komplementäres Profil auf, die Oberseite ist plan. Bei Nichtbenutzung muss die Matratze separat verstaut werden.

Aus der Praxis sind Passagiersitze bekannt, die mit einem oder zwei als Luftkissen ausgebildeten Lumbal- oder Lordosekissen ausgestattet sind. Mit diesen Kissen wird angestrebt, allein mit der Variation des Luftvolumens in diesem Kissen den verschiedenen Komfortansprüchen gerecht zu werden. Dies gelingt bei Kraftfahrzeugsitzen, deren Rückenlehne nur in einer im wesentlichen aufrechten Position benutzt wird. Bei Liegesitzen oder Schlafsesseln z.B. in Flugzeugen gelingt dies nur unvollkommen.

Es ist deshalb Aufgabe der vorliegenden Erfindung, einen Passagiersitz zu schaffen, der weitergehende Anpassungsmöglichkeiten aufweist.

Diese Aufgabe wird von einem Passagiersitz mit den Merkmalen des Anspruchs 1 gelöst.

Weil bei dem Passagiersitz mit einer neigungsverstellbaren und mit einem vorderseitigen Bezug versehenen Rückenlehne sowie mit einer unter dem Bezug angeordneten schaumstoffgefüllten Luftkissenanordnung, vorgesehen ist, dass die Luftkissenanordnung wenigstens ein mittig angeordnetes Luftkissen und zwei Seitenluftkissen aufweist und weil die Rückenlehne eine unter dem Bezug angeordnete konkave Rückenmulde aufweist, die von dem mittigen Luftkissen im aufgeblasenen Zustand im wesentlichen ausgefüllt ist, und weil die Seitenluftkissen im evakuierten Zustand im wesentlichen eben unter dem Bezug angeordnet und im evakuierten Zustand gemeinsam mit dem zwischen den Seitenluftkissen angeordneten mittigen Luftkissen im aufgeblasenen Zustand eine im wesentlichen ebene Fläche bilden, kann die Kontur der Rückenlehne in der Horizontalrichtung variiert werden. So kann eine Schalenform zur seitlichen Abstützung in einer eher vertikalen Position ebenso erzielt werden wie eine ganz oder nahezu flache Form in einer Liegeposition der Rückenlehne.

Für eine schalenförmige Kontur der Rückenlehne ist es vorteilhaft, wenn die Seitenluftkissen an das mittige Luftkissen angrenzen und im aufgeblasenen Zustand nahe dem Luftkissen eine geringere Dicke aufweisen als in einem dem mittigen Luftkissen abgewandten Bereich. Vorzugsweise sind die Seitenluftkissen so ausgebildet, dass sie im aufgeblasenen Zustand die konkave Form der Rückenmulde und des darin befindlichen evakuierten mittigen Luftkissens im wesentlichen unterbrechungsfrei seitlich fortführen.

Der subjektiv angenehme Eindruck eines festen Bezugsstoffes wird gefördert, wenn der Bezug zumindest mit den Seitenluftkissen, vorzugsweise auch mit dem mittigen Luftkissen, lösbar zugfest verbunden ist, so dass der Bezug beim Evakuieren eines Luftkissens mit diesem in Anlage bleibt.

Eine einfache Bedienung oder eine automatische Betätigung der Luftkissen wird ermöglicht, wenn die Luftkissen in Abhängigkeit von einer Steuerung mit einer Vorrichtung zur Vakuumerzeugung verbindbar sind. Es kann vorgesehen sein, dass die Luftkissen selbstaufblasend sind. Die Luftkissen können auch in Abhängigkeit von einer Steuerung mit einer Vorrichtung zur Drucklufterzeugung verbindbar sein.

Zusätzlicher Komfort kann dadurch erzielt werden, dass im unteren Lendenwirbelbereich der Rückenlehne zwischen dem mittigen Luftkissen und dem Bezug wenigstens ein weiteres Lumballuftkissen vorgesehen ist, welches unabhängig von dem mittigen Luftkissen aufblasbar ist. Ein schnelles Aufblasen und Entleeren dieses Luftkissens wird gefördert, wenn das Lumballuftkissen nicht schaumstoffgefüllt ist.

Bei einem erfindungsgemäßen Verfahren zur Verstellung eines Passagiersitzes, insbesondere bei einem Sitz mit den vorhergehenden Merkmalen, sind folgende Schritte vorgesehen:
a) Evakuieren wenigstens eines in der Rückenlehne mittig angeordneten Luftkissens und Aufblasen von wenigstens zwei seitlich neben dem Luftkissen angebrachten Seitenluftkissen zur Ausformung einer Schalenform in einer aufrechten Position der Rückenlehne;
b) teilweises Aufblasen des mittigen Luftkissens und teilweises Evakuieren der Seitenluftkissen in einer geneigten Position der Rückenlehne; und
c) Evakuieren der Seitenluftkissen und Aufblasen des mittigen Luftkissens zu einer im wesentlichen ebenen Liegefläche in einer Liegestellung der Rückenlehne.

Es kann vorgesehen sein, dass die Verfahrensschritte a) bis c) von einer Steuerung automatisch in Abhängigkeit von dem Neigungswinkel der Rückenlehne vorgenommen werden.

Auf diese Weise ist der automatische Übergang von einer konturierten Rückenlehne zu einer flachen Sitzfläche realisierbar.

Nachfolgend wird ein Ausführungsbeispiel der Erfindung anhand der Zeichnung beschrieben. Es zeigen:
- Fig. 1:: Die Luftkissenanordnung in der Rückenlehne eines erfindungsgemäßen Passagiersitzes in einer schematischen Darstellung bei abgenommenem Bezugsstoff;
- Fig. 2:: die Rückenlehen gemäß Figur 1 in aufrechter Position mit schalenförmiger Kontur;
- Fig. 3:: einen Querschnitt durch die Rückenlehne gemäß Figur 2 entlang der Linie III-III;
- Fig. 4:: die Rückenlehne gemäß Figur 1 in einer horizontalen Liegeposition mit flacher Kontur;
- Fig. 5:: die Rückenlehne gemäß Figur 4 in einem Querschnitt entlang der Linie V-V; sowie
- Fig. 6:: die Rückenlehne gemäß Figur 1 in vier verschiedenen Betriebszuständen der Lumbalkissen, die zyklisch durchlaufen werden können.

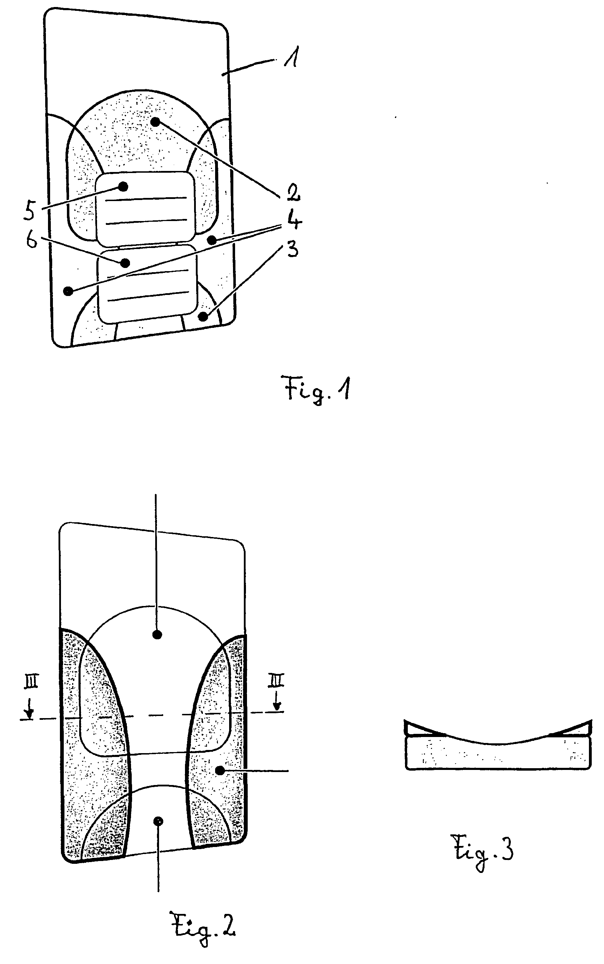

In der Figur 1 ist eine Rückenlehne 1 eines Flugzeugpassagiersitzes in einer schematischen Darstellung veranschaulicht. Die Rückenlehne 1 weist insgesamt vier Schaumstoff gefüllte Luftkissen im Bereich der unteren Rückenhöhe auf, nämlich ein oberes mittiges Luftkissen 2, ein unteres mittiges Luftkissen 3 sowie zwei Seitenluftkissen 4. Die Luftkissen 2-4 werden an ihrer dem Rücken des Passagiers zugewandten Seite von zwei zusätzlichen Lumbal- oder Lordosekissen 5 und 6 teilweise überdeckt.

Zur besseren Veranschaulichung der Lage der Luftkissen 2-4 relativ zueinander sind die Konturen dieser Luftkissen transparent dargestellt. In einer realen Ausführungsform liegen in dem jeweiligen Überlappungsbereich die Luftkissen 2 und 3 über den Seitenluftkissen 4.

weiter ist in einer vollständigen Ausführungsform die Rückenlehne 1 mit einem Bezugsstoff und einer weiteren Polsterung umgeben, so dass die Luftkissen 2-6 nicht erkennbar sind.

Die Figur 2 zeigt die Rückenlehne 1 in einer aufrechten Stellung, wie sie etwa bei Flugzeugen während der Start- und Landephase vorgesehen ist. In dieser Stellung sind die mittigen Luftkissen 2 und 3 weitgehend evakuiert, so dass diese flach an der Rückenlehne 1 anliegen. Die Seitenluftkissen 4 sind aufgeblasen und bilden so eine Abstützung links und rechts von dem mittigen Bereich, indem sich der Rücken des Passagiers befindet.

Ein Querschnitt entlang der Linie III-III ist in der Figur 3 dargestellt. Es ist ersichtlich, dass die Rückenlehne 1 mittig eine Mulde 10 aufweist, in der das evakuierte Luftkissen 2 befestigt ist. Die Seitenluftkissen 4 ergänzen im aufgeblasenen Zustand durch ihre Keilform die Mulde 10 zu einer Schalenform, die den gewünschten Sitzkomfort und insbesondere die seitliche Führung gewährleistet.

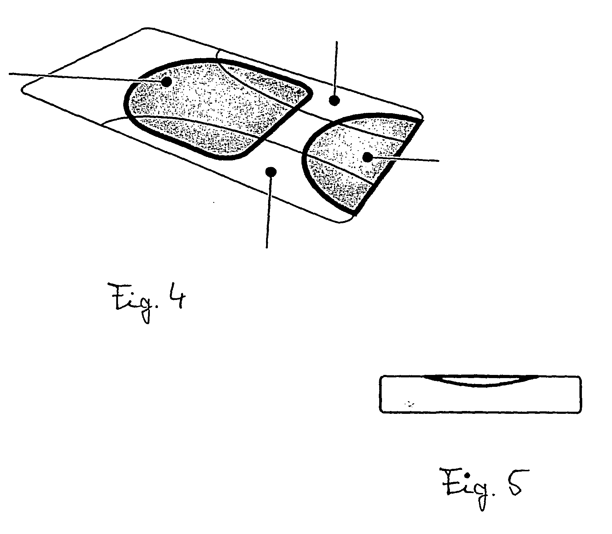

In der Figur 4 ist die Rückenlehne 1 in einer vollständig horizontalen Position dargestellt, wie sie bei Schlafsesseln vorgesehen ist. In dieser Position sind die Seitenluftkissen 4 vollständig evakuiert, während die mittigen Luftkissen 2 und 3 aufgeblasen sind. In der Figur 5 ist der Querschnitt entlang der Linie V-V in Figur 4 veranschaulicht. Es ist ersichtlich, dass die Rückenlehne 1 durch die evakuierten Seitenluftkissen und 4 und das aufgeblasene mittige Luftkissen 2 eine nahezu horizontale, ebene Oberfläche aufweist. Insbesondere ist die Mulde 10, die bei aufrechter Rückenlehne 1 die in Figur 2 dargestellte Schalenform ermöglicht, durch das Luftkissen 2 vollständig ausgefüllt. Zusammen mit der übrigen Polsterung der Rückenlehne 1 und der nicht dargestellten Sitzfläche ergibt sich in der horizontalen Stellung deshalb eine im wesentlichen ebene, matratzenartige Liegefläche.

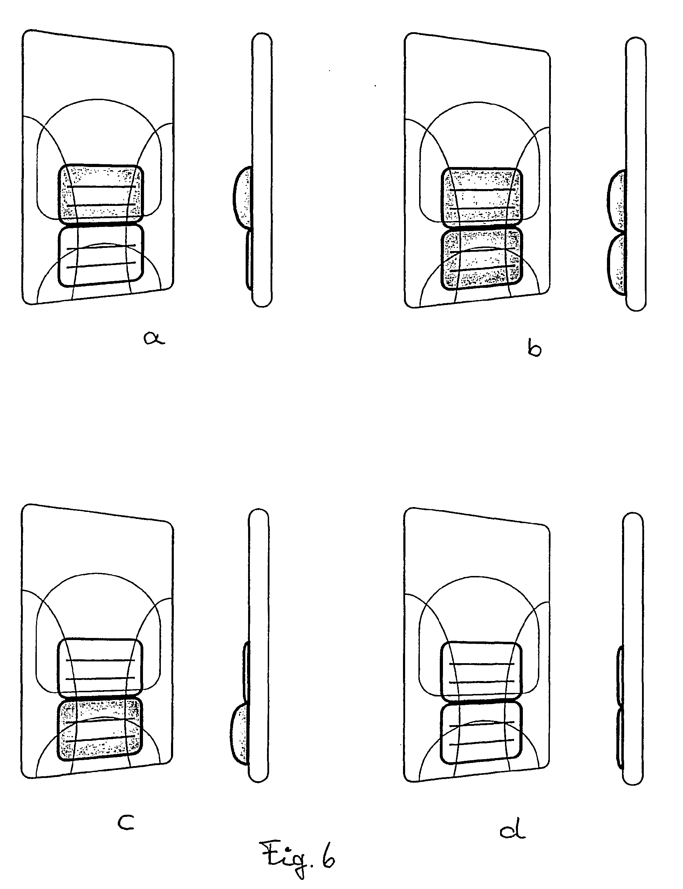

Die Figur 6 zeigt schließlich die Rückenlehne 1 in vier verschiedenen Betriebszuständen a), b), c) und d). Veranschaulicht sind jeweils eine perspektivische schematische Darstellung und eine Seitenansicht.

In der Figur 6 a) sind unabhängig von dem Betriebszustand der schaumstoffgefüllten Luftkissen 2-4 die Lumbalkissen 5 und 6 wesentlich. Im Betriebszustand a) ist das obere Lumbalkissen 5 aufgeblasen, während das untere Lumbalkissen 6 entleert ist. Der Betriebszustand b) zeigt beide Lumbalkissen 5 und 6 in aufgeblasenem Zustand. Der Betriebszustand c) zeigt das obere Lumbalkissen 5 in entleertem Zustand und das untere Lumbalkissen 6 in aufgeblasenem Zustand. In der Figur 6 d) ist schließlich gezeigt, wie beide Lumbalkissen 5 und 6 entleert sind.

In der Praxis wird das so beschriebene Luftkissensystem folgendermaßen betrieben. Die schaumstoffgefüllten Luftkissen 2-4 bewirken die Konturierung der Rückenlehne in verschiedenen Neigungszuständen. So wird beim Start eines Flugzeugs zunächst die Rückenlehne 1 wie in der Figur 2 dargestellt senkrecht gestellt sein. Die Seitenluftkissen 4 sind aufgeblasen, während die Luftkissen 2 und 3 evakuiert sind. Es ergibt sich die in der Figur 3 veranschaulichte Schalenform, die als besonders komfortabel empfunden wird, da der Passagier eine seitliche Abstützung erfährt. Wird die Sitzlehne jetzt durch den Passagier geneigt, so bewirkt eine elektronische Steuerung eine Änderung des Füllungszustandes der Luftkissen 2-4. Die Seitenluftkissen 4 werden dabei durch Verbindung mit einer Vakuumpumpe teilweise entleert und werden dadurch etwas flacher. Die Luftkissen 2 und 3 geringfügig gefüllt werden. Die Konturierung wird hierdurch insgesamt zurückgenommen, wobei aber eine gewisse Konturierung verbleibt. Dies wird als hohe Position bezeichnet. Wird die Rückenlehne weiter geneigt, so wird schließlich die Schlafposition erreicht. In dieser Position, die in der Figur 4 veranschaulicht ist, sind die Seitenkissen 4 vollständig evakuiert und damit flach, während die Luftkissen 2 und 3 soweit aufgeblasen sind, dass sie die Mulde 10 ausfüllen und eine insgesamt nachgiebig gepolsterte horizontale Liegefläche bilden, die durch die nicht dargestellte Sitzfläche und die Fußstütze ergänzt wird.

Wird nach der Schlafposition die Rückenlehne wieder angehoben, so laufen die beschriebenen Prozesse zur Änderung des Füllgrades der Luftkissen 2-4 in umgekehrte Richtung ab. Es wird bevorzugt, dass die Füllungs- und Evakuierungsvorgänge automatisch in Abhängigkeit von der Neigung der Lehne 1 ausgeführt werden, so dass der Passagier keine Eingriffsmöglichkeit in die Steuerung dieser vier Luftkissen hat.

Zur Erhöhung des Sitzkomforts ist das in Figur 6 veranschaulichte Lumbalsystem vorgesehen. Bei diesem System kann zum einen als Massagefunktion der Zyklus gewählt werden, der in den Figuren 6 a) - 6 d) veranschaulicht ist. Diese vier Betriebszustände werden zyklisch durchlaufen, wodurch der untere Rückenbereich des Passagiers massiert wird und Ermüdungserscheinungen oder Verspannungszustände bei längeren Flugzeiten vermieden werden. Der Passagier hat auch die Möglichkeit, die Lumbalkissen 5 und 6 selektiv statisch aufzublasen, so dass die gewünschte Unterstützung des Lendenwirbelbereichs erzielt wird. Diese Funktion kann unabhängig von der Steuerung der Luftkissen 1-4 vorgenommen werden, da die Lumbalkissen 5 und 6 bei einer bevorzugten Ausführungsform nicht schaumstoffgefüllt sind, kann das Füllen und Entleeren relativ schnell erfolgen, während bei den schaumstoffgefüllten Luftkissen 2-4 der Evakuierungs- und Füllvorgang relativ langsam erfolgt.

Es ist schließlich bei den beschriebenen Luftkissen vorgesehen, den darüber angeordneten Bezug zugfest und lösbar mit den Kissen 2-4 zu verbinden, beispielsweise mit einem Klettband. Diese Verbindung führt dazu, dass beim Evakuieren der Luftkissen 2-4 der Bezugsstoff dem Luftkissen folgt. Dadurch wird verhindert, dass bei evakuierten Luftkissen der Bezugsstoff undefiniert angeordnet ist.

## Patentansprüche

1. Passagiersitz mit einer neigungsverstellbaren und mit einem vorderseitigen Bezug versehenen Rückenlehne (1) sowie mit einer unter dem Bezug vorgesehenen schaumstoffgefüllten Luftkissenanordnung (2, 34), wobei die Luftkissenanordnung wenigstens ein mittig angeordnetes Luftkissen (2, 3) und zwei Seitenluftkissen (4) aufweist, **dadurch gekennzeichnet, dass** die Rückenlehne eine unter dem Bezug angeordnete konkave Rückenmulde aufweist, die von dem mittigen Luftkissen (2, 3) im aufgeblasenen Zustand im wesentlichen ausgefüllt ist und dass die Seitenkissen (4) im evakuierten Zustand und das zwischen den Seitenluftkissen angeordnete mittige Luftkissen im aufgeblasenen Zustand gemeinsam eine im wesentlichen ebene Fläche bilden.

2. Passagiersitz nach Anspruch 1, **dadurch gekennzeichnet, dass** die Seitenluftkissen an das mittige Luftkissen angrenzen und im aufgeblasenen Zustand nahe dem Luftkissen eine geringere Dicke aufweisen als in einem dem mittigen Luftkissen abgewandten Bereich.

3. Passagiersitz nach einem der vorhergehenden Ansprüche, **dadurch gekennzeichnet, dass** die Seitenluftkissen im aufgeblasenen Zustand die konkave Form der Rückenmulde und des darin befindlichen evakuierten mittigen Luftkissens im wesentlichen unterbrechungsfrei seitlich fortführen.

4. Passagiersitz nach einem der vorhergehenden Ansprüche, **dadurch gekennzeichnet, dass** die Seitenluftkissen im evakuierten Zustand im wesentlichen eben unter dem Bezug angeordnet sind.

5. Passagiersitz nach einem der vorhergehenden Ansprüche, **dadurch gekennzeichnet, dass** der Bezug zumindest mit den Seitenluftkissen, vorzugsweise auch mit dem mittigen Luftkissen, lösbar zugfest verbunden ist, so dass der Bezug beim Evakuieren eines Luftkissens mit diesem in Anlage bleibt.

6. Passagiersitz nach einem der vorhergehenden Ansprüche, **dadurch gekennzeichnet, dass** die Luftkissen in Abhängigkeit von einer Steuerung mit einer Vorrichtung zur Vakuumerzeugung verbindbar sind.

7. Passagiersitz nach einem der vorhergehenden Ansprüche, **dadurch gekennzeichnet, dass** die Luftkissen selbstaufblasend sind.

8. Passagiersitz nach einem der vorhergehenden Ansprüche, **dadurch gekennzeichnet, dass** die Luftkissen in Abhängigkeit von einer Steuerung mit einer Vorrichtung zur Drucklufterzeugung verbindbar sind.

9. Passagiersitz nach einem der vorhergehenden Ansprüche, **dadurch gekennzeichnet, dass** im unteren Lendenwirbelbereich der Rückenlehne zwischen dem mittigen Luftkissen und dem Bezug wenigstens ein weiteres Lumballuftkissen vorgesehen ist, welches unabhängig von dem mittigen Luftkissen aufblasbar ist.

10. Passagiersitz nach einem der vorhergehenden Ansprüche, **dadurch gekennzeichnet, dass** das Lumballuftkissen nicht schaumstoffgefüllt ist.

11. Verfahren zur Verstellung eines Passagiersitzes, insbesondere nach einem der vorhergehenden Ansprüche, **gekennzeichnet durch** folgende Schritte:
a) Evakuieren wenigstens eines in der Rückenlehne (1) mittig angeordneten Luftkissens (2, 3) und Aufblasen von wenigstens zwei seitlich neben dem Luftkissen angebrachten Seitenluftkissen (4) zur Ausformung einer Schalenform in einer aufrechten Position der Rückenlehne;
b) teilweise Aufblasen des mittigen Luftkissens (2, 3) und teilweise Evakuieren der Seitenluftkissen (4) in einer geneigten Position der Rückenlehne; und
c) Evakuieren der Seitenluftkissen (4) und Aufblasen des mittigen Luftkissens (2, 3) zu einer im wesentlichen ebenen Liegefläche in einer Liegestellung der Rückenlehne.

12. Verfahren nach Anspruch 11, **dadurch gekennzeichnet, dass** die Verfahrensschritte a) bis c) von einer Steuerung automatisch in Abhängigkeit von dem Neigungswinkel der Rückenlehne vorgenommen werden.

## Claims

1. Passenger seat with an inclination-adjustable seat back (1) provided with a covering on the front side, as well as a foam-filled air cushion arrangement (2, 3, 4) provided under the covering, wherein the air cushion arrangement has at least one centrally-arranged air cushion (2, 3) and two side air cushions (4), **characterised in that** the seat back has a concave back recess arranged beneath the covering, which is essentially filled by the central air cushion (2, 3) in the inflated state, and **in that** the side cushions (4) in the evacuated state and the central air cushion arranged between the side air cushions in the inflated state form together an essentially flat surface.

2. Passenger seat according to Claim 1, **characterised in that** the side air cushions delimit the central air cushion and in the inflated state have a lesser thickness close to the air cushion than in an area facing away from the central air cushion.

3. Passenger seat according to either of the preceding claims, **characterised in that** the side air cushions in the inflated state continue the concave shape of the back recess and the evacuated central air cushion located in it, essentially without interruption.

4. Passenger seat according to any one of the preceding claims, **characterised in that** the side air cushions in the evacuated state are essentially arranged flat under the covering.

5. Passenger seat according to any one of the preceding claims, **characterised in that** the covering is connected in a tension-resistant but releasable manner to the side air cushions, preferably also to the central air cushion, such that on evacuation of an air cushion the covering remains in contact with it.

6. Passenger seat according to any one of the preceding claims, **characterised in that** the air cushions, as a function of a control unit, can be connected to a device for creating a vacuum.

7. Passenger seat according to any one of the preceding claims, **characterised in that** the air cushions are self-inflating.

8. Passenger seat according to any one of the preceding claims, **characterised in that** the air cushions, as a function of a control unit, can be connected to a device for generating compressed air.

9. Passenger seat according to any one of the preceding claims, **characterised in that** in the lower lumbar spine region of the seat back, between the central air cushion and the covering, at least one further lumbar air cushion is provided, which can be inflated independently of the central air cushion.

10. Passenger seat according to any one of the preceding claims, **characterised in that** the lumbar air cushion is not filled with foam material.

11. Method for adjustment of a passenger seat, in particular according to any one of the preceding claims, **characterised by** the following steps:
a) Evacuation of at least one air cushion (2, 3) arranged centrally in the seat back (1) and inflation of at least two side air cushions (4) located laterally next to the air cushion, to form a shell shape in an upright position of the seat back;
b) Partial inflation of the central air cushion (2, 3) and partial evacuation of the side air cushions (4) in an inclined position of the seat back; and
c) Evacuation of the side air cushions (4) and inflation of the central air cushion (2, 3) to form an essentially flat lying surface in a recumbent position of the seat back.

12. Method according to Claim 11, **characterised in that** the method steps a) to c) are carried out automatically by a control unit, as a function of the inclination angle of the seat back.

## Revendications

1. Siège de passager comprenant un dossier (1) d'inclinaison réglable et muni d'une garniture de revêtement sur le côté avant, ainsi qu'un agencement de coussins gonflables (2, 3, 4) rempli d'un matériau alvéolaire ou mousse, l'agencement de coussins gonflables présentant au moins un coussin gonflable (2, 3) agencés de manière centrale et deux coussins gonflables latéraux (4), **caractérisé en ce que** le dossier présente une cavité dorsale concave, qui est agencée sous la garniture de revêtement et est sensiblement remplie ou comblée par le coussin gonflable central (2, 3) dans l'état gonflé, et **en ce que** les coussin gonflables latéraux (4) dans l'état de vide ou dégonflé et le coussin gonflable central dans l'état gonflé et agencé entre les coussins gonflables latéraux, forment en commun une surface sensiblement plane.

2. Siège de passager selon la revendication 1, **caractérisé en ce que** les coussins gonflables latéraux sont adjacents au coussin gonflable central et présentent dans l'état gonflé, à proximité du coussin gonflable central une épaisseur moindre que dans une zone éloignée du coussin gonflable central.

3. Siège de passager selon l'une des revendications précédentes, **caractérisé en ce que** les coussins gonflables latéraux dans l'état gonflé prolongent latéralement, sensiblement sans interruption, la forme concave de la cavité dorsale et du coussin gonflable central dégonflé, qui s'y trouve.

4. Siège de passager selon l'une des revendications précédentes, **caractérisé en ce que** les coussins gonflables latéraux dans l'état de vide ou dégonflé sont agencés sensiblement de manière plane sous la garniture de revêtement.

5. Siège de passager selon l'une des revendications précédentes, **caractérisé en ce que** la garniture de revêtement est reliée de manière amovible et résistante à la traction au moins avec les coussins gonflables latéraux, de préférence également avec le coussin gonflable central, de sorte que la garniture de revêtement, lors du dégonflage d'un coussin gonflable, reste en appui avec celui-ci.

6. Siège de passager selon l'une des revendications précédentes, **caractérisé en ce que** les coussins gonflables peuvent être reliés, en fonction d'une commande, à un dispositif pour la production de vide.

7. Siège de passager selon l'une des revendications précédentes, **caractérisé en ce que** les coussins gonflables sont autogonflants.

8. Siège de passager selon l'une des revendications précédentes, **caractérisé en ce que** les coussins gonflables peuvent être reliés, en fonction d'une commande, à un dispositif pour la production d'air comprimé.

9. Siège de passager selon l'une des revendications précédentes, **caractérisé en ce que** dans la zone inférieure des vertèbres lombaires du dossier, il est prévu entre le coussin gonflable central et la garniture de revêtement, un autre coussin gonflable lombaire, qui peut être gonflé indépendamment du coussin gonflable central.

10. Siège de passager selon l'une des revendications précédentes, **caractérisé en ce que** le coussin gonflable lombaire n'est pas rempli de matériau alvéolaire.

11. Procédé pour régler un siège de passager, notamment selon l'une des revendications précédentes, **caractérisé par** les étapes suivantes:
a) dégonflage par le vide d'au moins un coussin gonflable (2, 3) agencé de manière centrale dans le dossier (1), et gonflage d'au moins deux coussins gonflables latéraux (4) placés latéralement à côté dudit coussin gonflable, en vue de réaliser une forme de coque dans une position redressée du dossier ;
b) gonflage partiel du coussin gonflable central (2, 3) et dégonflage partiel par le vide des coussins gonflables latéraux (4) dans une position inclinée du dossier ; et
c) dégonflage par le vide des coussins gonflables latéraux (4) et gonflage du coussin gonflable central (2, 3) pour former une surface de couchage sensiblement plane dans une position de couchage du dossier.

12. Procédé selon la revendication 11, **caractérisé en ce que** les étapes de procédé a) à c) sont effectuées automatiquement par une commande en fonction de l'angle d'inclinaison du dossier.
